(19) Europäisches Patentamt
European Patent Office
Office européen des brevets

(11) **EP 0 732 597 B1**

(12) **FASCICULE DE BREVET EUROPEEN**

(45) Date de publication et mention
de la délivrance du brevet:
**20.06.2001   Bulletin 2001/25**

(51) Int Cl.⁷: **G01S 11/02**, H04L 27/18

(21) Numéro de dépôt: **96400518.5**

(22) Date de dépôt: **13.03.1996**

(54) **Procédé de mesure de distance et de transmission de données et terminal correspondant**

Verfahren zur Messung des Abstandes, zur Übertragung von Daten und dazugehöriges Endgerät

Method and measuring distance, transmission of data, and a corresponding terminal

(84) Etats contractants désignés:
**BE DE FR GB IT**

(30) Priorité:  **15.03.1995  FR 9502999**

(43) Date de publication de la demande:
**18.09.1996   Bulletin 1996/38**

(73) Titulaire: **CENTRE NATIONAL D'ETUDES SPATIALES**
**F-75039 Paris Cedex 01 (FR)**

(72) Inventeur: **Ribes, André**
**31360 Labege (FR)**

(74) Mandataire: **Signore, Robert et al**
**c/o BREVATOME**
**3, rue du Docteur Lanceraux**
**75008 Paris (FR)**

(56) Documents cités:
**US-A- 3 040 315**          **US-A- 3 366 957**
**US-A- 3 508 248**

## EP 0 732 597 B1

## Description

### Domaine technique

La présente invention a pour objet un procédé de mesure de distance et de transmission de données et un terminal correspondant. Elle trouve une application dans la localisation d'objets ou de mobiles par satellite, notamment dans le système TAOS proposé par le Centre National d'Etudes Spatiales. Ce système utilise plusieurs satellites répartis sur des orbites basses circulaires à des altitudes inférieures à 1500 km et inclinées de 50 à 60°. A bord de chaque satellite se trouve embarqué un répéteur transparent. Les bandes de fréquences utilisées sont les bandes UFH/VHF : dans la liaison Terre-satellite, on utilise la bande 148-150,05 MHz et dans la liaison satellite-Terre la bande 137-138 MHz et 400,15-401 MHz. Les messages sont transmis par paquets.

### Etat de la technique

On connaît un procédé de localisation de mobiles qui consiste à moduler une porteuse à l'aide de divers signaux sinusoïdaux appelés "tons". En mesurant la phase de ces tons dans le mobile à localiser, par rapport à la phase dans la station émettrice, on peut déterminer la distance entre la station et le mobile. La porteuse peut avoir, par exemple, une fréquence située dans la bande 148-150 MHz et les tons avoir une fréquence répartie entre 20 kHz pour le ton à plus haute fréquence (dit ton majeur) et 10 kHz pour le ton de plus basse fréquence (dit ton mineur). La présence de ces tons permet de lever l'ambiguïté sur la mesure des distances.

Il existe une norme européenne pour cette technique. Cette norme a été établie par l'Agence Spatiale Européenne. Elle est décrite dans le document "Ranging Standard" édité par Data Handing and Signal Processing Division European Space Research and Technology Centre Noordwijk, Pays-Bas.

Cette technique permet non seulement de déterminer les distances mais également les variations de distance et cela à partir de mesures d'effet DOPPLER. Pour cela, on mesure les décalages en fréquence entre les différents signaux émis et reçus.

Pour cette technique de radio-localisation, on pourra se reporter également à l'ouvrage collectif intitulé "Techniques et technologies des véhicules spatiaux", Tome 1, Cépaduès-Editions, (1994) et spécialement au Module 6 "Localisation spatiale" pages 561-634.

Dans le système TAOS, la fonction de mesure de distance est accompagnée d'une liaison de transmission de données entre la Station Centrale et les mobiles, la même fréquence porteuse étant utilisée dans les deux cas. On est alors confronté à la transmission simultanée de plusieurs signaux à partir d'un même point, ce qui pose des problèmes de compatibilité radioélectrique et de cohabitation des spectres de fréquence transmis, et soulève des difficultés de réalisation des circuits d'exploitation des signaux par le terminal utilisateur. La recherche du meilleur compromis entre précision des mesures et simplicité des circuits reste l'objectif majeur dont dépend le succès économique d'un tel système.

La présente invention a justement pour but de résoudre ces problèmes et de remédier à ces difficultés.

### Exposé de l'invention

A cette fin, la présente invention propose :

- un nouveau principe de modulation de la porteuse permettant de transmettre les informations numériques vers le terminal utilisateur et comportant les fréquences nécessaires pour répondre aux exigences de la mesure de distance ainsi qu'à la transmission de données numériques vers le terminal,
- une architecture générale de circuits permettant d'exploiter les signaux propres à l'invention tant pour la mesure de distance que pour la détection des données reçues.

De façon précise, la présente invention a pour objet un procédé de mesure de distance et de transmission de données entre une station et un terminal récepteur à travers un satellite, dans lequel la station émet, à destination du terminal, une porteuse radiofréquence modulée comprenant au moins deux composantes à des fréquences différentes permettant une mesure fine de la distance et une levée d'ambiguïté sur la distance, cette porteuse étant apte également à transmettre lesdites données, ce procédé étant caractérisé par le fait que la porteuse est modulée en phase par une sous-porteuse de fréquence supérieure à la fréquence des données à transmettre, cette sous-porteuse étant codée en phase par les bits des données à transmettre, et n'occupant qu'une partie de la période de chaque bit.

Dans un mode de réalisation préféré, la sous-porteuse peut avoir une fréquence triple de la fréquence correspondant au rythme des données transmises. Les symboles occupent alors, de préférence, les deux premiers tiers de la période affectée à chaque bit des données (mais ils pourraient occuper aussi les deux derniers tiers).

Quant à la sous-porteuse, elle peut être de n'importe quel type. Il semble cependant que les formes carrée et sinusoïdale soient avantageuses.

La présente invention a également pour objet un terminal pour la réception et le traitement du signal émis selon le procédé qui vient d'être défini.

## Brève description des dessins

- la figure 1 illustre le principe du codage de la sous-porteuse ;
- la figure 2 montre l'allure de la composante périodique du signal p(t) ;
- la figure 3 montre le spectre du signal en échelle linéaire ;
- la figure 4 montre le même spectre en échelle logarithmique ;
- la figure 5 montre l'allure du signal $\varepsilon(t)$ ;
- la figure 6 illustre la décomposition du signal p(t) ;
- la figure 7 montre l'allure de la composante périodique du signal $p_2(t)$ ;
- la figure 8 montre l'allure de la composante périodique du signal $\alpha(t)$ ;
- la figure 9 montre l'allure du signal r(t) ;
- la figure 10 montre le spectre du signal en échelle linéaire ;
- la figure 11 montre le même spectre en échelle logarithmique ;
- la figure 12 illustre un premier mode de réalisation d'un terminal utilisant le signal propre à l'invention ;
- la figure 13 illustre un second mode de réalisation de ce terminal.

## Description de modes particuliers de réalisation

Selon l'invention, le signal s(t) émis par la Station Centrale est une porteuse de fréquence $f_0$ modulée en phase par la succession supposée infinie de motifs S0(t) et S1(t) avec un indice de modulation $\theta$. Ce signal peut être représenté de la manière suivante :

$$s(t) = \sqrt{2P} \sin [\omega_0 t + \theta m(t)]$$

Dans cette expression, P est la puissance du signal, $\omega_0$ est la pulsation de la porteuse ($\omega_0 = 2\pi f_0$, et m(t) représente le train infini de symboles S0(t) et S1(t) codés en phase.

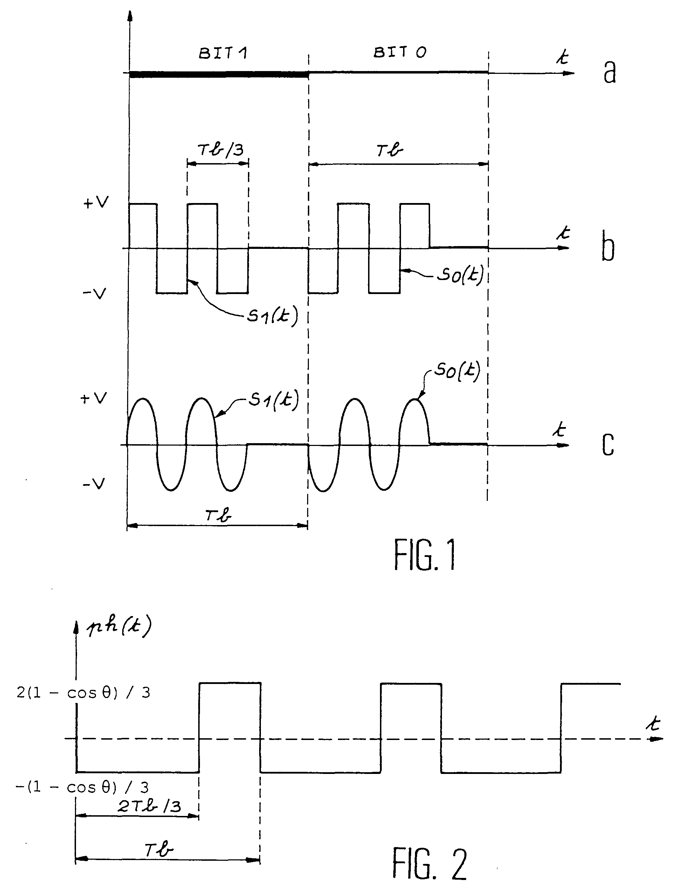

Les symboles S0(t) et S1(t) sont illustrés sur la figure 1. La ligne a de cette figure montre deux des bits à transmettre, respectivement 1 et 0. Ces bits ont une durée Tb. Au bit 1 correspond un symbole (ou motif) S1(t) et au bit 0 un symbole S0(t). La ligne b illustre le cas d'une sous-porteuse carrée et la ligne c celui d'une sous-porteuse sinusoïdale.

Dans l'exemple illustré, les symboles S0(t) et S1(t) sont caractérisés par les particularités suivantes :

- la durée de chaque symbole est partagée en trois parties égales ;
- les deux premières parties sont occupées par un paquet (ou "burst") constitué de deux périodes entières de sous-porteuse carrée ou sinusoïdale ;
- la dernière partie du motif ne comporte pas de signal ;
- les symboles "1" ou "0" sont différenciés par inversion de la phase du paquet de deux périodes de la sous-porteuse.

Il s'agit donc d'un codage par la phase (en terminologie anglo-saxonne "Phase Shift Keying" ou PSK en abrégé). Comme il existe un "blanc" ou une absence de sous-porteuse à la fin de la période, on peut qualifier ce signal de "paquet à codage en phase avec blanc" ou, en terminologie anglo-saxonne "Phase Shift Keying Burst Blank" (PSKBB en abrégé).

Sur les techniques de modulation de phase, on pourra consulter l'ouvrage déjà cité et notamment le chapitre 8.6.6.11 intitulé "Modulation par déplacement de phase".

La description qui suit donnera le détail de l'analyse du signal s(t) ainsi modulé. Mais, d'ores et déjà, on peut donner l'expression de ce signal développé en ses diverses composantes :

### A) pour une sous-porteuse carrée :

$$s(t) = \sqrt{2P} \sin(\omega_0 t)\left\langle \frac{1 + 2\cos(\theta)}{3} + 2(1 - \cos(\theta))\sum_{n=1}^{\infty} \frac{\sin\left(\frac{n\pi}{3}\right)}{n\pi} \cos(n\omega_b t) \right\rangle$$
$$+ \sqrt{2P}\left\{\cos(\omega_0 t).\, m(t).\, \sin(\theta)\right\}$$

**B) pour une sous-porteuse sinusoïdale :**

$$s(t) = \sqrt{2P} \sin(\omega_0 t)\left\{ \frac{1 + 2J_0(\theta)}{3} + 2[1 - J_0(\theta)]\sum_{n=1}^{\infty} \frac{\sin(\frac{n\pi}{3})}{n\pi} \cos(n\omega_b t) \right\} +$$

$$\sqrt{2P} \sin(\omega_0 t)\left\{ \left[ \frac{4}{3} - 4\sum_{n=1}^{\infty} \frac{\sin(\frac{n\pi}{3})}{n\pi} \cos(n\omega_b t) \right] \sum_{k=1}^{\infty} (-1)^k J_{2k}(\theta) \cos(2k\omega_s t) \right\} -$$

$$2\sqrt{2P} \cos(\omega_0 t)\varepsilon(t)\left( \sum_{k=1}^{\infty} (-1)^k J_{2k-1}(\theta) \cos((2k - 1)\omega_s t) \right)$$

Ces deux expressions montrent la présence de composantes spectrales utiles pour la démodulation du signal reçu, mais aussi pour les besoins liés à la mesure de distance.

De façon plus précise, ces composantes spectrales sont les suivantes :

**A) pour une sous-porteuse carrée :**

- la porteuse pure est de la forme :

$$s_1(t) = \sqrt{2P}\left( \frac{1 + 2\cos(\theta)}{3} \right) \sin(\omega_0 t)$$

- les composantes harmoniques du rythme de symbole sont données par :

$$s_2(t) = \sqrt{2P}\left( 2(1 - \cos(\theta))\sum_{n=1}^{\infty} \frac{\sin(\frac{n\pi}{3})}{n\pi} \cos(n\omega_b t) \right) \sin(\omega_0 t)$$

- la composante liée à l'information m(t) transmise est :

$$S_3(t) = \sqrt{2P}(\cos(\omega_0 t)m(t)\sin(\theta))$$

**B) Pour une sous-porteuse sinusoïdale :**

- la porteuse pure est de la forme :

$$s_1(t) = \sqrt{2P}\left(\frac{1 + 2J_0(\theta)}{3}\right)\sin(\omega_0 t)$$

- les composantes harmoniques du rythme de symbole sont :

$$s_2(t) = \sqrt{2P}\left(2[1 - J_0(\theta)]\sum_{n=1}^{\infty}\frac{\sin(\frac{n\pi}{3})}{n\pi}\cos(n\omega_b t)\sin(\omega_0 t)\right)$$

- la composante liée à l'information transmise est :

$$s_3(t) = 2\sqrt{2P}\ \varepsilon(t)\left(\sum_{k=1}^{\infty}(-1)^k J_{2k-1}(\theta)\cos\big((2k-1)\omega_s t\big)\right)\cos(\omega_0 t)$$

- les composantes harmoniques de la fréquence sous-porteuse sont :

$$s_4(t) = \sqrt{2P}\ \frac{4}{3}\left\{\sum_{k=1}^{\infty}(-1)^k J_{2k}(\theta)\cos(2k\omega_s t)\right\}\sin(\omega_0 t)$$

Les différentes composantes du signal s(t), dans les deux modes présentés, conduisent à une architecture de récepteur de terminal utilisateur relativement simple puisque les signaux choisis véhiculent les informations nécessaires à la localisation (la fréquence au rythme de symbole Rb pour la levée d'ambiguïté, la sous-porteuse à 3Rb pour la mesure fine) ainsi que pour la transmission d'information. Deux types de terminaux peuvent être développés, avec et sans capacité de mesure de distance. Les terminaux sans mesure de distance seront plus simples, car ils ne traiteront pas les fréquences Rb et 3Rb pour cette fonction, le reste de l'électronique restant inchangé. La contre partie à cette simplicité se traduit par une perte d'énergie de 1,76 décibel mesurée sur le rapport Eb/No dans les deux cas de codage signal présentés.

Avant de décrire la structure de ces terminaux capables d'exploiter de tels signaux, l'analyse de ces signaux va être développée en détail pour justifier les résultats annoncés.

**1) Analyse du signal à sous-porteuse carrée**

Le signal de forme générale $s(t) = \sqrt{2P}\ \sin[\omega_0 t + \theta m(t)]$ peut être développé en l'expression :

$$s(t) = \sqrt{2P}\Big\{\sin(\omega_0 t)\cos(\theta m(t)) + \cos(\omega_0 t)\sin(\theta m(t))\Big\}$$

$$avec\begin{cases}\cos(\theta m(t)) = \begin{bmatrix}1 & pour\ m(t) = 0 \\ \cos\theta & pour\ m(t) = \pm 1\end{bmatrix} \\[2em] \sin(\theta m(t)) = m(t)\sin\theta\end{cases}$$

On posera $p(t) = \cos(\theta m(t))$ où $p(t)$ représente un signal périodique de période Tb correspondant à l'enveloppe de $m(t)$. La valeur moyenne de $p(t)$ est :

$$\overline{p(t)} = \frac{1 + 2\cos(\theta)}{3}$$

La composante harmonique (c'est-à-dire p(t) débarrassée de sa valeur moyenne) notée $p_h$ (t) a la forme temporelle illustrée sur la figure 2.

Elle est décomposable en série de FOURIER sous la forme d'un signal fondamental auquel sont ajoutées les composantes harmoniques. Le résultat obtenu est le suivant :

$$p_h(t) \ = \ 2(1 - \cos(\theta)) \sum_{n=1}^{\infty} \frac{\sin(\frac{n\pi}{3})}{n\pi} \cos(n\omega_b t)$$

Le signal de fréquence fondamentale a pour amplitude :

$$p_1 = 2(1 - \cos(\theta)) \ \frac{\sin(\frac{\pi}{3})}{\pi}$$

soit 0,551(1-cosθ)

L'expression de l'amplitude des deux premières composantes harmoniques est fournie par les expressions suivantes :

(a) composante harmonique d'ordre 2 :

$$p_2 = 2(1(\cos(\theta)) \ \frac{\sin(\frac{2\pi}{3})}{2\pi}$$

soit 0,275(1-cos(θ))

(b) composante harmonique d'ordre 4 :

$$p_4 = 2(1 - \cos(\theta)) \ \frac{\sin(\frac{4\pi}{3})}{4\pi}$$

soit -0, 137 (1-cos (θ))

On notera que la composante harmonique d'ordre 3 est inexistante.

Le spectre de densité de puissance de la porteuse sera, par conséquent, constitué d'une succession de raies discrètes dont une raie à la fréquence porteuse, produite par la composante continue de p(t). Les autres raies apparaissent aux fréquences f0±Fb, f0±2Fb, f0±4Fb, etc...

Le spectre de la modulation (partie informationelle) est constitué par le déplacement autour de la fréquence f0 du spectre des signaux représenté par m(t) ; dans le cas de signaux de forme carrée, ce spectre est donné par :

$$S(f) \ = \ \frac{4V^2 T_b}{9} \left( \frac{\sin(\frac{2\pi f}{3F_b})}{\left(\frac{2\pi f}{3F_b}\right)} \tan(\frac{\pi f}{6F_b}) \right)^2$$

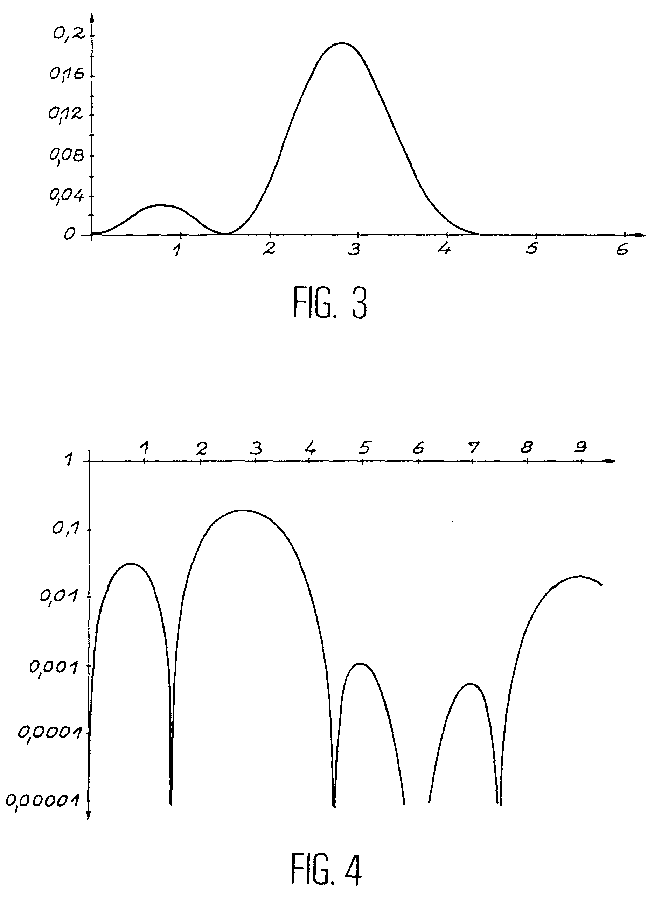

Les figures 3 et 4 montrent l'allure du spectre S(f)/Tb en échelle linéaire (figure 3) et logarithmique (figure 4). Les courbes sont à compléter par symétrie paire vers les fréquences négatives.

La répartition des puissances sur les composantes essentielles du spectre est la suivante :

(a) sur la porteuse non modulée :

$$P_{pp} = P\left(\frac{1 + 2\cos\theta}{3}\right)^2$$

(b) sur le fondamental au rythme de bit :

$$P_{Rb} = \frac{P}{2}\, 0,303(1-\cos\theta)^2$$

(c) sur l'harmonique 2 :

$$P_{2Rb} = \frac{P}{2}\, 0,0756(1 - \cos\theta)^2$$

(d) sur l'harmonique 4 :

$$P_{4Rb} = \frac{P}{2}\, 0,0187(1 - \cos\theta)^2$$

Les fractions de puissance correspondant aux points b à d sont applicables aux signaux obtenus après démodulation. Par rapport à la puissance P, la répartition de puissance en décibel est, pour un indice de modulation θ égal à π/2 :

| | |
|---|---|
| porteuse non modulée : | 10 Log(1/9)=-9,54 dB |
| Harmonique 1 : | 10 Log(0,151)=-8,19 dB |
| Harmonique 2 : | 10 Log(0,0378) =-14,22 dB |
| Harmonique 4 : | 10 Log(0,00935)=-20,29 dB |

En ce qui concerne la partie informationnelle des signaux, la perte sur le rapport énergétique Eb/No par rapport à un codage qui ne serait pas avec "blanc" est :
10 Log(2/3)=-1,76 dB
les différentes composantes ci-dessus regroupent 97,5% de la puissance émise. Si cette répartition de puissance ne convenait pas pour la réception de la porteuse ou le rythme de bit, par exemple, on pourrait modifier l'indice de modulation au détriment du rapport Eb/No qui ira en diminuant (le facteur $\sin^2(\theta)$ serait différent de 1 dans ce cas).

**2) Analyse du signal à sous-porteuse sinusoïdale**

Dans le cas de symboles de forme sinusoïdale, on obtient une répartition des puissances un peu différente faisant intervenir des fonctions de BESSEL au lieu des fonctions trigonométriques.
On peut écrire m(t)=ε(t)sin($\omega_p$t). L'expression du signal devient

$$s(t) = \sqrt{2P}\{\sin(\omega_0 t)\cos[\theta\varepsilon(t)\sin(\omega_s t)] + \cos(w_0 t)\sin[\theta\varepsilon(t)\sin(\omega_s t]\}$$

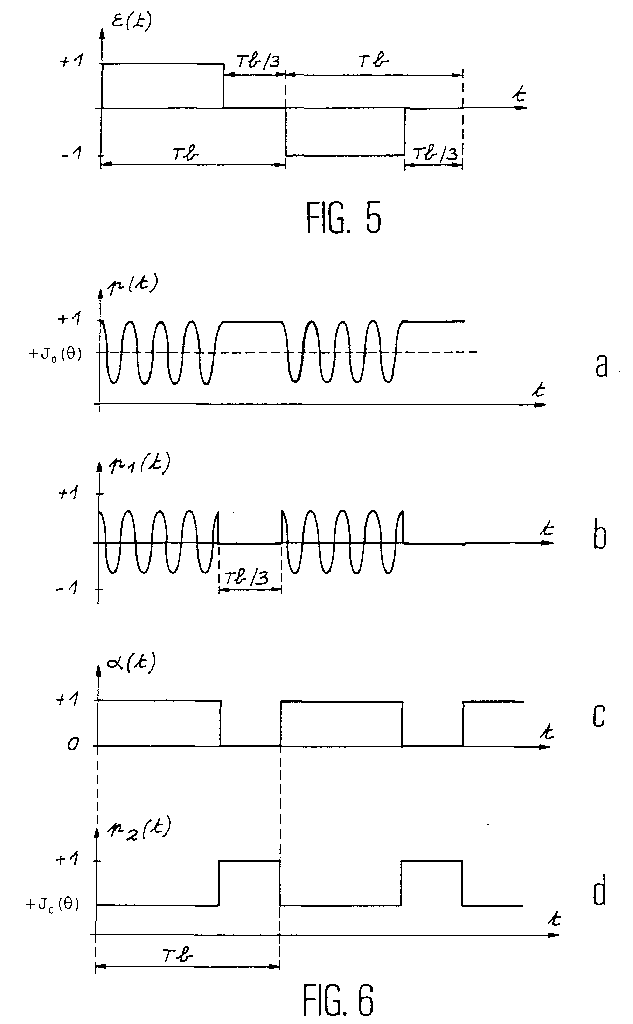

Le signal ε(t) représente la partie informationnelle des signaux émis (il est de type aléatoire) ; son allure temporelle est conforme à la figure 5 (qui est limitée pour des raisons pratiques à la représentation d'un bit "1" suivi d'un bit "0" uniquement).
La quantité p(t)=cos[θε(t)sin($\omega_s$t)] est représentée sur la ligne <u>a</u> de la figure 6. Le signal p(t) prend les valeurs suivantes :
p(t) = 1        lorsque ε(t) = 0
p(t) = cos[θsin($\omega_s$t)]        lorsque ε(t) = ± 1
Le signal p(t) ne comporte plus aucun caractère aléatoire. Le terme cos[θsin($\omega_s$t)] est décomposable en série à l'aide des focntions de BESSEL, soit :

$$\cos\big(\theta\,\sin(\omega_s t)\big) = J_0(\theta) + \sum_{k=1}^{\infty} 2(-1)^k J_{2k}(\theta)\cos(2k\omega_s t)$$

Le signal p(t) est égal à la somme de deux signaux périodiques décomposables en série de FOURIER, soit p(t)=$p_1$(t)+$p_2$(t) avec :

$$p_1(t) = \alpha(t) \sum_{k=1}^{\infty} (-1)^k 2 J_{2k}(\theta) \cos(2k\omega_s t)$$

où $\alpha$ (t) est l'enveloppe de $p_1$(t),

$p_2$(t) représente la valeur moyenne de p(t) selon les phases de temps à l'intérieur d'un bit, conformément à la définition qui en a été donnée plus haut (voir figure 1).

Le signal $p_1$(t) est représenté sur la ligne b de la figure 6, le signal $\alpha$(t) sur la ligne c̲ et le signal $p_2$(t) sur la ligne d̲.

Le signal $p_2$(t) se décompose en une valeur moyenne

$$\overline{p(t)} = \frac{1 + 2J_0(\theta)}{3}$$

et une composante purement périodique $p_h$(t) décomposable en série de FOURIER selon l'expression :

$$p_h(t) = 2(1 - J_0(\theta)) \sum_{n=1}^{\infty} \frac{\sin(\frac{n\pi}{3})}{n\pi} \cos(n\omega_b t)$$

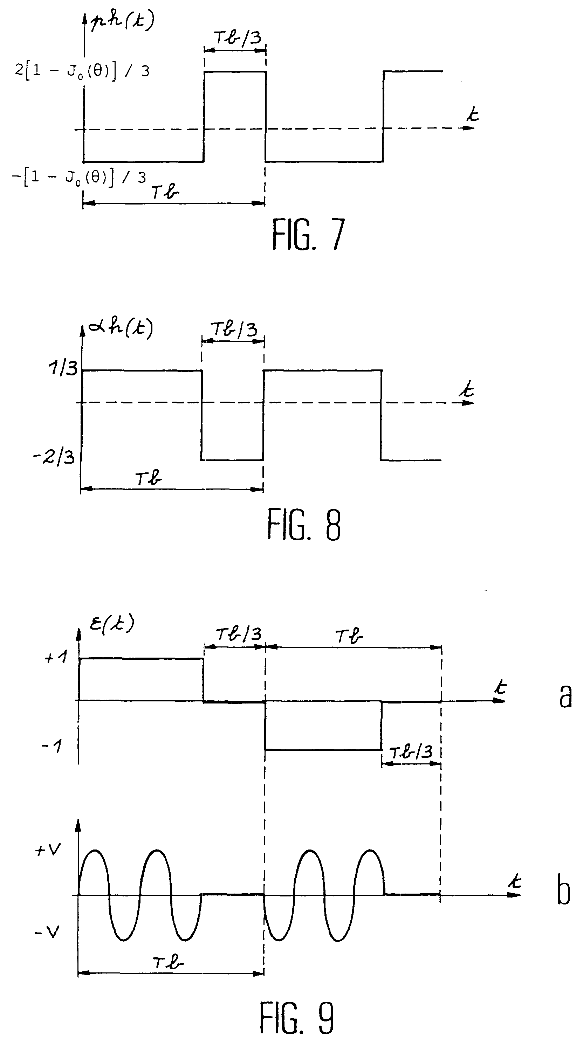

Le signal $p_h$(t) représentant la composante périodique de $p_2$ (t) est représentée sur la figure 7.

En ce qui concerne $P_1$ (t), il convient de décomposer $\alpha$(t) en série de FOURIER, soit $\alpha(t) = \overline{\alpha(t)} + \alpha_h$(t) avec $\alpha(t) = 2 / 3$.

Les composantes harmoniques, représentées par le signal $\overline{\alpha_h(t)}$ (voir figure 8) ont pour développement :

$$\alpha_h(t) = -2 \sum_{n=1}^{\infty} \frac{\sin(\frac{n\pi}{3})}{n\pi} \cos(n\omega_b t)$$

Finalement,

$$p_1(t) = \left[ \frac{4}{3} - 4 \sum_{n=1}^{\infty} \frac{\sin(\frac{n\pi}{3})}{n\pi} \cos(n\omega_b t) \right] \sum_{k=1}^{\infty} (-1)^k J_{2k}(\theta) \cos(2k\omega_s t)$$

Le signal p(t) a finalement pour expression :

$$p(t) = \frac{1 + 2J_0(\theta)}{3} + 2[1 - J_0(\theta)] \sum_{n=1}^{\infty} \frac{\sin(\frac{n\pi}{3})}{n\pi} \cos(n\omega_b t) +$$

$$\left[ \frac{4}{3} - 4 \sum_{n=1}^{\infty} \frac{\sin(\frac{n\pi}{3})}{n\pi} \cos(n\omega_b t) \right] \sum_{k=1}^{\infty} (-1)^k J_{2k}(\theta) \cos(2k\omega_s t)$$

Son spectre d'amplitude est constitué d'une série de raies discrètes réparties comme suit :

- sur le continu :

$$\overline{p(t)} = \frac{1 + 2J_0(\theta)}{3}$$

- aux fréquences multiples du rythme binaire :

$$2(1 - J_0(\theta))\sum_{n=1}^{\infty} \frac{\sin(\frac{n\pi}{3})}{n\pi} \cos(n\omega_b t)$$

- aux fréquences multiples de la sous-porteuse, soit $2k\omega_s$) :

$$\frac{4}{3} \sum_{k=1}^{\infty} (-1)^k J_{2k}(\theta) \cos(2k\omega_s t)$$

- aux fréquences $n\omega_b + 2k\omega_s$ :

$$-4\sum_{n=1}^{\infty} \frac{\sin(\frac{n\pi}{3})}{n\pi} \cos(n\omega_b t)\sum_{k=1}^{\infty} (-1)^k J_{2k}(\theta) \cos(2k\omega_s t)$$

**3) Analyse de la quantité r(t)=sin[θε(t)sin(ω$_s$t)] :**

Cette quantité peut s'écrire :

$$r(t) = \varepsilon(t) \sin(\theta\sin\omega_s t)$$

Mais

$$\sin(\theta \sin(\omega_s t)) = -2\sum_{k=1}^{\infty} (-1)^k J_{2k-1}(\theta) \cos((2k - 1)\omega_s t)$$

Le spectre de r(t) est obtenu en effectuant le produit de convolution entre celui de ε(t) et les raies qui correspondent à la décomposition de sin(θsinω$_s$t). L'allure temporelle de la quantité r(t) est représentée sur la figure 9, ligne b, la première ligne a donnant l'allure du signal ε(t).

Le spectre correspondant est donné par l'expression :

$$S_r(f) = P\left(\frac{2}{9}\right)T_b\left(\frac{\sin\left(\pi \frac{2}{3}(\frac{f + f_s}{Fb})\right)}{\left(\pi \frac{2}{3}\left(\frac{f + f_s}{F_b}\right)\right)} - \frac{\sin\left(\pi \frac{2}{3}\left(\frac{f - f_s}{Fb}\right)\right)}{\left(\pi \frac{2}{3}\left(\frac{f - f_s}{Fb}\right)\right)}\right)^2$$

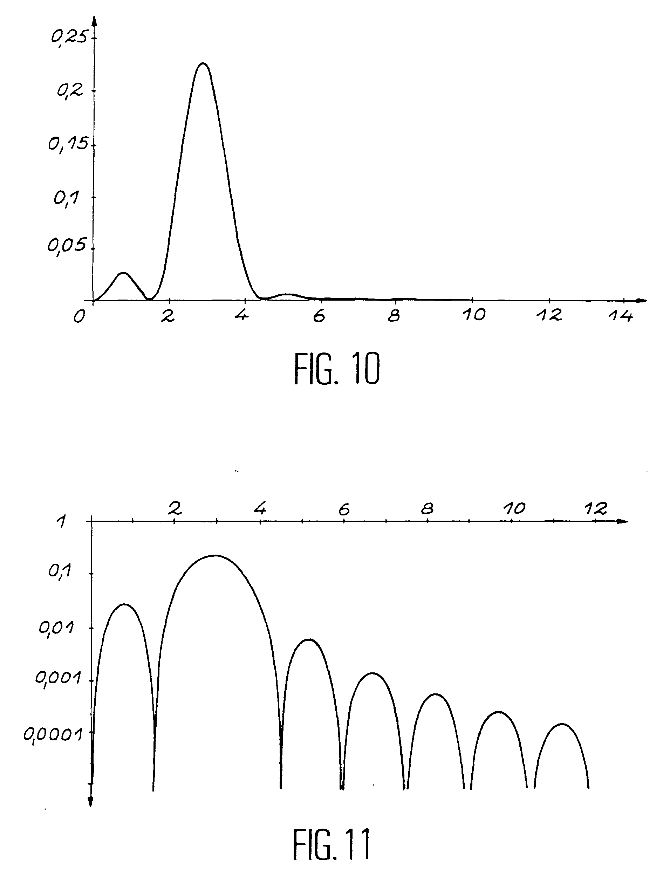

Le spectre de la modulation qui correspond à la partie informationnelle des signaux est moins "polluant" en fréquence que dans le cas d'une sous-porteuse carrée, les lobes secondaires s'atténuant plus rapidement. Les figures 10 et 11 donnent une idée du spectre obtenu respectivement en échelle linéaire (fig. 10) et logarithmique (fig. 11). Elles sont à compléter par une symétrie paire sur les fréquences négatives. Ces figures sont à comparer avec les figures homologues 3 et 4.

Le spectre final de s(t) est obtenu à partir de l'expression temporelle suivante, qui regroupe les différents termes identifiés précédemment :

$$s(t) = \sqrt{2P} \sin(\omega_0 t)\left\{\frac{1 + 2J_0(\theta)}{3} + 2\big[1 - J_0(\theta)\big]\sum_{n=1}^{\infty} \frac{\sin(\frac{n\pi}{3})}{n\pi} \cos(n\omega_b t)\right\} +$$

$$\sqrt{2P} \sin(\omega_0 t)\left\{\left[\frac{1}{4} - 4\sum_{n=1}^{\infty} \frac{\sin(\frac{n\pi}{3})}{n\pi} \cos(n\omega_b t)\right]\sum_{k=1}^{\infty} (-1)^k J_{2k}(\theta) \cos(2k\omega_s t)\right\} -$$

$$2\sqrt{2P} \cos(\omega_0 t)\varepsilon(t)\left(\sum_{k=1}^{\infty} (-1)^k J_{2k-1}(\theta) \cos((2k - 1)\omega_s t)\right)$$

Seules quelques composantes seront exploitées ; on identifie, sur ces composantes, les proportions de puissances suivantes :

- Porteuse non modulée à $F_0$ :

$$P_1 = P\left(\frac{1 + 2J_0(\theta)}{3}\right)$$

- Rythme digital à $F_b$ :

$$P_2 = 2P[1-J_0(\theta)]^2 \frac{\sin^2(\frac{\pi}{3})}{\pi^2}$$

- Fréquence sous-porteuse à 2fs :

$$P_3 = \frac{P}{2}\left[\frac{4}{3} J_2(\theta)\right]^2$$

Le mode de réalisation qui vient d'être décrit, avec sa sous-porteuse à une fréquence triple de la fréquence des bits à transmettre et une occupation des deux premiers tiers de la période d'un bit, n'est pas le seul possible. D'autres valeurs de la fréquence sous-porteuse ainsi que d'autres proportions entre la durée de présence et d'absence de signal (durée de chaque paquet) peuvent être retenues en fonction de la valeur du rythme de symbole choisi pour la transmission d'informations et les besoins en précision de restitution du temps de retard des signaux de mesure de distance. Cependant, la fréquence de la sous-porteuse se situera le plus souvent aux environs de 20 kHz, tandis que le rythme numérique pourra être plus faible dans certains cas pour s'adapter à des conditions de liaison plus défavorables.

Le signal utilisé à l'émission selon l'invention ayant été décrit, il reste à indiquer comment le récepteur peut exploiter un tel signal pour effectuer la mesure de distance et extraire l'information liée aux données. Sur les méthodes générales de démodulation de signaux modulés en phase, on pourra se reporter à l'ouvrage déjà cité et notamment au chapitre 8.6.7 intitulé "Démodulation et restitution du message numérique".

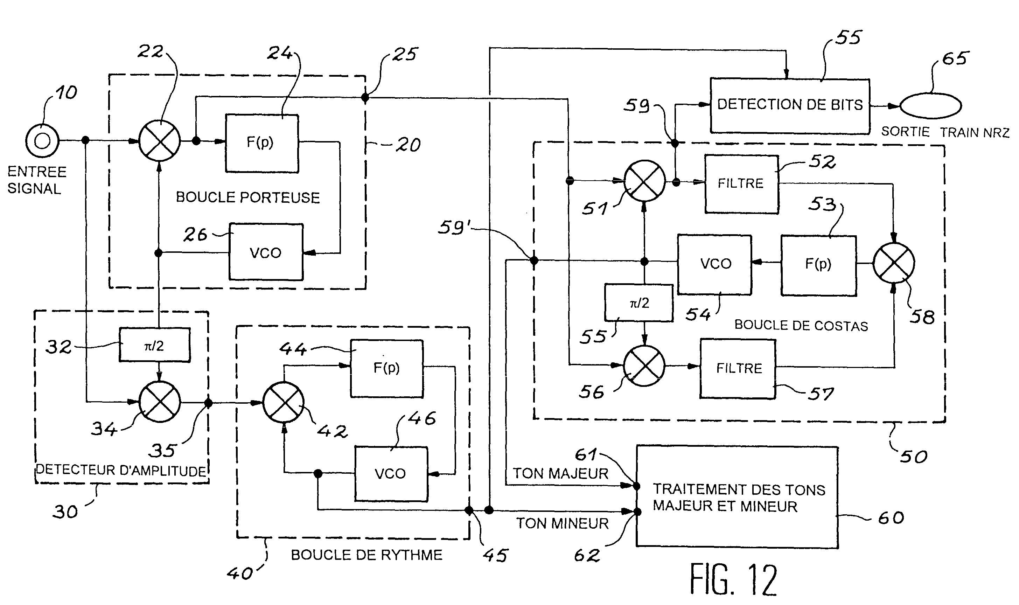

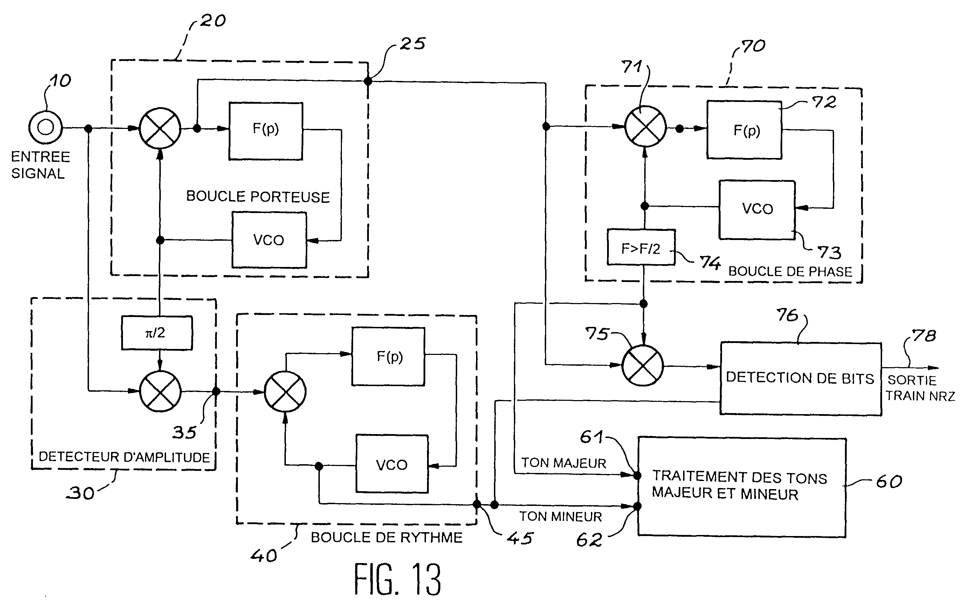

Les figures 12 et 13 représentent deux variantes de terminal capables de traiter le signal émis selon l'invention.

Le terminal représenté sur la figure 12 comprend une entrée générale 10, un premier sous-ensemble 20 qui est une boucle de phase, un deuxième sous-ensemble 30 qui est un détecteur d'amplitude, un troisième sous-ensemble 40 qui est une boucle de rythme, un quatrième sous-ensemble 50 qui est une boucle de COSTAS, et un cinquième sous-ensemble 60 qui est un circuit de traitement.

Le premier sous-ensemble 20 est une boucle de phase qui permet la synchronisation du signal reçu sur la partie non modulée de la porteuse. Cette boucle comprend, de manière classique, un filtre 24, un oscillateur commandé en tension (VCO) 26 et un multiplieur 22. Le signal démodulé est délivré sur la sortie 25.

Le deuxième sous-ensemble 30 est un détecteur d'amplitude comprenant un déphaseur 32 de $\pi/2$ relié à la sortie de l'oscillateur 26 et un multiplieur 34. Le rythme de symbole apparaît sur la sortie 35.

Le troisième sous-ensemble 40 est une boucle de phase synchronisée sur le rythme de symbole obtenu sur la sortie 35 du deuxième sous-ensemble 30. Il comprend un filtre 44, un oscillateur commandé en tension 46, et un multiplieur 42. Sa sortie 45 délivre le rythme de symbole avec un meilleur rapport signal à bruit.

Le quatrième sous-ensemble 50 est une boucle de type COSTAS. Elle se synchronise sur les paquets de sous-porteuse (carrée ou sinusoïdale). Cette boucle est utilisée pour éliminer les paquets de sous-porteuse du signal de données m(t) et le transformer en un train de signaux de type non retour à zéro (NRZ) présents pendant les deux tiers de la durée élémentaire de chaque symbole. Elle comprend un multiplieur 51, un filtre passe-bas 52, un autre filtre 53, un oscillateur commandé en tension 54 (VCO), un déphaseur 55 de $\pi/2$, un multiplieur 56, un filtre passe-bas 57 et un multiplieur 58. Les symboles sous forme non-retour-à-zéro (NRZ) sont délivrés sur la sortie 59. Une autre sortie 59' délivre la fréquence de la sous-porteuse.

Le circuit 55, relié à cette sortie 59, est un détecteur de symboles fondé sur l'emploi d'un filtre adapté aux signaux NRZ. Il utilise le signal en sortie de l'ensemble 40. Ce détecteur de symbole est constitué d'un intégrateur parfait, qui intègre les signaux pendant les deux tiers significatifs de la durée élémentaire de chaque symbole reçu. Le train numérique utile véhiculant l'information est finalement obtenu sur la sortie 65.

L'ensemble se complète enfin par un circuit 60 qui reçoit sur une entrée 61 la fréquence des symboles délivrée par la sortie 45 du sous-ensemble 40 et sur une entrée 62 la fréquence de la sous-porteuse délivrée par la sortie 59' du sous-ensemble 50. Autrement dit, le circuit 60 reçoit un "ton majeur" (la fréquence de la sous-porteuse) et un "ton mineur" (la fréquence des symboles). A l'aide de ces deux tons, et comme dans l'art antérieur, le circuit 60 mesure la distance de manière fine et lève l'ambiguïté sur la distance.

Les circuits de la figure 12 sont classiques, pris isolément. On pourra trouver dans l'ouvrage cité plus haut, notamment dans le paragraphe 6.3.4 portant sur les récepteurs de radiolocation/navigation, une description de ces boucles de phase.

Dans la variante de la figure 13, le sous-ensemble 50 de la figure 12 (boucle de COSTAS) a été remplé par une boucle de phase asservie 70 sur l'harmonique deux de la sous-porteuse en sinus et comprend pour cela un multiplieur 71, un filtre 72 et un oscillateur commandé en tension 73, ces moyens étant suivis d'un diviseur de fréquence par deux 74. Un multiplieur 75 combine les signaux délivrés par le sous-ensemble 70 et le sous-ensemble 20 et alimente le circuit détecteur de bits 76. La sortie des données s'effectue sur la sortie 78.

Les fonctions remplies par les ensembles des figures 12 et 13 peuvent être également remplies de manière numérique, chaque fonction ayant un équivalent en mode échantillonné.

## Revendications

1. Procédé de mesure de distance et de transmission de données entre une station et un terminal récepteur à travers un satellite, dans lequel la station émet, à destination du terminal, une porteuse radiofréquence modulée comprenant au moins deux composantes à des fréquences différentes permettant une mesure fine de la distance et une levée d'ambiguïté sur la distance, cette porteuse étant apte également à transmettre lesdites données, ce procédé étant caractérisé par le fait que la porteuse est modulée en phase par une sous-porteuse de fréquence supérieure à la fréquence (Rb) des données à transmettre, cette sous-porteuse étant codée en phase par les bits des données à transmettre, et n'occupant qu'une partie de la période (Tb) de chaque bit.

2. Procédé selon la revendication 1, caractérisé par le fait que la sous-porteuse à une fréquence triple (3Rb) de la fréquence (Rb) des données à transmettre, la sous-porteuse n'occupant que les deux premiers tiers de la durée (Tb) des bits transmis.

3. Procédé selon la revendication 1 ou 2, caractérisé par le fait que la sous-porteuse est un signal carré.

4. Procédé selon les revendications 1 ou 2, caractérisé par le fait que la sous-porteuse est un signal sinusoïdal.

5. Terminal pour la mise en oeuvre du procédé selon l'une quelconque des revendications 1 à 4, caractérisé par le fait qu'il comprend :

- un premier sous-ensemble (20) sous forme de boucle de phase apte à démoduler le signal reçu,
- un deuxième sous-ensemble (30) sous forme de détecteur d'amplitude,
- un troisième sous-ensemble (40) sous forme de boucle de phase restituant le rythme des bits transmis,
- un quatrième sous-ensemble (50, 70) sous forme de boucle de phase recevant le signal démodulé délivré par le premier sous-ensemble (20) et le rythme des bits transmis délivré par le troisième sous-ensemble (40) et restituant la fréquence de la sous-porteuse,
- un circuit (55, 76) de détection des bits, relié au troisième et au quatrième sous-ensemble,
- un circuit (60) de traitement des signaux délivrés par le troisième (40) et le quatrième (50, 70) sous-ensembles, pour le calcul de la distance.

**Patentansprüche**

1. Verfahren zur Abstandsmessung und Datenübertragung zwischen einer Station und einem Empfangsterminal über einen Satelliten, bei dem die Station an das Terminal einen modulierten Radiofrequenzträger sendet, der wenigstens zwei Komponenten mit unterschiedlichen Frequenzen umfasst, was eine Feinmessung des Abstands und eine Behebung von Mehrdeutigkeit bezüglich des Abstands ermöglicht, wobei dieser Träger ebenfalls fähig ist, die genannten Daten zu übertragen,
   **dadurch gekennzeichnet,**
   dass der Träger durch einen Unterträger mit einer höheren Frequenz als der Frequenz (Rb) der zu übertragenden Daten phasenmoduliert wird und dieser Unterträger dabei durch die Bits der zu übertragenden Daten phasencodiert wird und nur einen Teil der Periode (Tb) jedes Bits belegt.

2. Verfahren nach Anspruch 1, dadurch gekennzeichnet, dass der Unterträger eine dreifache Frequenz (3Rb) der Frequenz (Rb) der zu übertragenden Daten hat, wobei der Unterträger nur die beiden ersten Drittel der Dauer (Tb) der übertragenen Bits belegt.

3. Verfahren nach Anspruch 1 oder 2, dadurch gekennzeichnet, dass der Unterträger ein Rechteckimpulssignal ist.

4. Verfahren nach den Ansprüchen 1 oder 2, dadurch gekennzeichnet, dass der Unterträger ein sinusförmiges Signal ist.

5. Terminal zur Anwendung des Verfahrens nach einem der Ansprüche 1 bis 4, dadurch gekennzeichnet, dass es umfasst:

- ein erstes Teilsystem (20) in Form einer Phasenschleife, fähig das empfangene Signal zu demodulieren,
- ein zweites Teilsystem (30) in Form eines Amplitudendetektors,
- ein drittes Teilsystem (40) in Form einer Phasenschleife, das den Takt der übertragenen Bits wiederherstellt,
- ein viertes Teilsystem (50, 70) in Form einer Phasenschleife, welches das durch das erste Untersystem (20) gelieferte demodulierte Signal und den durch das dritte Teilsystem (40) gelieferten Takt der übertragenen Bits empfängt und die Frequenz des Unterträgers wiederherstellt,
- eine Detektionsschaltung (55, 76) der Bits, verbunden mit dem dritten und dem vierten Teilssystem,
- eine Schaltung (60) zur Verarbeitung der durch das dritte (40) und das vierte (50, 70) Teilsystem gelieferten Signale, um den Abstand zu berechnen.

**Claims**

1. Method of measuring distance and of transmitting data between a station and a receiving terminal via a satellite, in which the station delivers, to the terminal as a destination, a modulated radio frequency carrier comprising at least two components of different frequencies allowing accurate measurement of the distance and removal of the ambiguity on the distance, this carrier being adapted also to transmit the said data, this method being characterised by the fact that the carrier is phase modulated by a sub- carrier of a higher frequency than the frequency (Rb) of the data to be transmitted, this sub-carrier being coded in phase by the bits of the data to be transmitted and occupying only a part of the period (Tb) of each bit.

2. Method according to Claim 1, characterised by the fact that the sub-carrier has a frequency (3Rb) three times the frequency (Rb) of the data to be transmitted, the sub-carrier occupying only the first two thirds of the duration (Tb) of the bits transmitted.

3. Method according to Claim 1 or 2, characterised by the fact that the sub-carrier is a square-wave signal.

4. Method according to Claims 1 or 2, characterised by the fact that the sub-carrier is a sinusoidal signal.

5. Terminal for putting into practice the method according to any one of Claims 1 to 4, characterised by the fact that it comprises:

- a first sub-assembly (20) in the form of a phase loop adapted to demodulate the signal received,
- a second sub-assembly (30) in the form of an amplitude detector,
- a third sub-assembly (40) in the form of a phase loop recovering the rhythm of the bits transmitted,
- a fourth sub-assembly (50, 70) in the form of a phase loop receiving the demodulated signal delivered by the first sub-assembly (20) and the rhythm of the transmitted bits delivered by the third sub-assembly (40) and recovering the frequency of the sub-carrier,
- a circuit (55, 76) for detecting the bits, connected to the third and the fourth sub-assembly,
- a circuit (60) for handling the signals delivered from the third (40) and the fourth (50,70) sub-assemblies, for calculating the distance.

FIG. 1

FIG. 2

FIG. 3

FIG. 4

FIG. 5

FIG. 6

16

FIG. 7

FIG. 8

FIG. 9

FIG. 10

FIG. 11

FIG. 12

FIG. 13